# EUROPEAN PATENT APPLICATION

(11) **EP 4 414 801 A1**
(43) Date of publication of application: **14.08.2024**
(21) Application number: 24156010.1
(22) Date of filing: 06.02.2024
(51) Int. Cl.: G05B 19/418, B65B 57/14, G01G 19/00

(54) **WEIGHING AND PACKAGING APPARATUS AND WEIGHING AND PACKAGING SYSTEM**

(30) Priority: 13.02.2023 JP 2023020058; 28.06.2023 JP 2023105598
(71) Applicant: Ishida Co., Ltd., Kyoto-shi Kyoto 606-8392 (JP)
(72) Inventor: NAKAGAWA, Yuji, Ritto-shi, Shiga, 520-3026 (JP); NONOHARA, Yasunari, Ritto-shi, Shiga, 520-3026 (JP); OTSU, Kyohei, Ritto-shi, Shiga, 520-3026 (JP); IWAKAWA, Ken, Ritto-shi, Shiga, 520-3026 (JP); TSUTSUMI, Hironori, Ritto-shi, Shiga, 520-3026 (JP); TATEISHI, Keita, Ritto-shi, Shiga, 520-3026 (JP)
(74) Representative: Global IP Europe Patentanwaltskanzlei

(57) **Abstract**

A weighing and packaging apparatus includes a weighing unit configured to weigh a first article to be weighed, a packaging unit configured to package the first article, a conveyance unit configured to convey the first article, an imaging unit configured to acquire a captured image of the first article, a storage unit configured to store a plurality of pieces of first feature information indicating respective features of a plurality of articles, an image processing unit configured to acquire second feature information indicating a feature of the first article, and a controller configured to control the conveyance unit and the packaging unit, in which the controller is configured to set a second article among the plurality of articles, generate a determination result as to whether or not the first article matches the second article, and determine whether or not the first article is conveyed to the packaging unit.

## Description

### TECHNICAL FIELD

The present disclosure relates to a weighing and packaging apparatus and a weighing and packaging system.

### BACKGROUND

Conventionally, a device (weighing and packaging apparatus) for packaging a weighed product has been put into practical use. For example, JP2017-057003A1 below discloses a packaging apparatus having a film packaging function for performing film packaging of a product or the like, a weighing function of weighing the product or the like, and a pricing function of attaching a label to the product or the like after the packaging. In such a packaging apparatus, an inappropriate label (for example, a label whose product name, price, and the like are incorrect) may be attached to a product. As a countermeasure against such a problem, for example, a technique disclosed in JP2015-030207A1 below is used. JP2015-030207A1 below discloses a label printer including a display unit that displays a print content of a label before product information is printed on the label.

By using the technique disclosed in JP2015-030207A1, the user of the packaging apparatus can confirm the accuracy of the specified product information and the printed content of the label before printing the label. Meanwhile, the determination as to whether the product placed on the packaging apparatus matches the designated product information is usually based only on the visual confirmation of the product by the user when the product is placed on the packaging apparatus. For this reason, when weighing, packaging, and pricing a large number and various kinds of products with the packaging apparatus, the user may gradually not visually confirm the products. In this case, there is a problem that an inappropriate label is attached to the product due to a mismatch between the product placed on the packaging apparatus and the designated product information. In addition, inappropriate packaging may be performed on the product placed on the packaging apparatus.

An object according to one aspect of the present disclosure is to provide a weighing and packaging apparatus and a weighing and packaging system capable of suppressing inappropriate execution of processing due to no visual confirmation of a product.

### SUMMARY

(1) According to one aspect of the present disclosure, there is provided a weighing and packaging apparatus including: a weighing unit configured to weigh an article to be weighed; a packaging unit configured to package the article to be weighed; a conveyance unit configured to convey the article to be weighed placed on the weighing unit to the packaging unit; an imaging unit configured to acquire a captured image of the article to be weighed placed on the weighing unit; a storage unit configured to store a plurality of pieces of first feature information indicating respective features of a plurality of articles; an image processing unit configured to acquire second feature information indicating a feature of the article to be weighed from the captured image; and a controller configured to control the conveyance unit and the packaging unit, in which the controller is configured to set a specific article among the plurality of articles as a current processing target, generate a determination result as to whether or not the article to be weighed matches the specific article based on feature information corresponding to the specific article among the plurality of pieces of first feature information and the second feature information, and determine whether or not the article to be weighed is conveyed to the packaging unit by the conveyance unit based on the determination result.
   According to this weighing and packaging apparatus, the determination result as to whether or not the article to be weighed matches the specific article is generated based on the feature information corresponding to the specific article as the processing target among the plurality of pieces of first feature information and second feature information of the article to be weighed placed on the weighing unit, and whether or not the article to be weighed is conveyed to the packaging unit by the conveyance unit is determined based on the determination result. As a result, for example, the article to be weighed can be set so as not to be packaged unless it is determined that the article to be weighed matches the specific article set as the processing target. For this reason, even in a case where the user does not visually confirm the product, it is difficult to execute inappropriate processing such as inappropriate packaging on the article to be weighed and attaching an inappropriate label to the article to be weighed. Therefore, by using the weighing and packaging apparatus, it is possible to suppress inappropriate execution of processing on the article to be weighed due to no visual confirmation.
(2) In the weighing and packaging apparatus according to (1), when the controller generates a first determination result indicating that the article to be weighed matches the specific article and a weighing value of the article to be weighed is stabilized, the conveyance unit may convey the article to be weighed to the packaging unit. In this case, when the article to be weighed does not match the specific article, it is difficult to execute inappropriate processing such as inappropriate packaging on the article to be weighed and attaching an inappropriate label to the article to be weighed.
(3) In the weighing and packaging apparatus according to (1) or (2), when the controller generates a second determination result indicating that the article to be weighed does not match the specific article, the controller may control the conveyance unit such that the article to be weighed is not conveyed to the packaging unit and notify information prompting review of the processing target and/or the article to be weighed via a notification unit. In this case, a user of the weighing and packaging apparatus can quickly review the processing target and/or the article to be weighed.
(4) In the weighing and packaging apparatus according to any one of (1) to (3), when a mode is set in which the processing of the article to be weighed is continued in a case where the article to be weighed cannot be specified from the captured image of the article to be weighed, the article to be weighed may be conveyed to the packaging unit as the set specific article, and the captured image of the article to be weighed and product information of the specific article may be acquired in association with each other.
(5) According to another aspect of the present disclosure, there is provided a weighing and packaging system including: a weighing unit configured to weigh an article to be weighed; a packaging unit configured to package the article to be weighed; a conveyance unit configured to convey the article to be weighed placed on the weighing unit to the packaging unit; a storage unit configured to store a plurality of pieces of first feature information indicating respective features of a plurality of articles; an imaging unit configured to acquire a captured image of the article to be weighed placed on the weighing unit; and an arithmetic device configured to acquire second feature information indicating a feature of the article to be weighed from the captured image, in which the arithmetic device is configured to set a specific article among the plurality of articles as a current processing target, generate a determination result as to whether or not the article to be weighed matches the specific article based on feature information corresponding to the specific article among the plurality of pieces of first feature information and the second feature information, and determine whether or not the article to be weighed is conveyed to the packaging unit by the conveyance unit based on the determination result.
   According to this weighing and packaging system, the determination result as to whether or not the article to be weighed matches the specific article is generated based on the feature information corresponding to the specific article among the plurality of pieces of first feature information and the second feature information of the article to be weighed, and whether or not the article to be weighed is conveyed to the packaging unit by the conveyance unit is determined based on the determination result. As a result, for example, the article to be weighed can be set so as not to be packaged unless it is determined that the article to be weighed matches the specific article set as the processing target. For this reason, even in a case where the user does not visually confirm the product, it is difficult to execute inappropriate processing such as inappropriate packaging on the article to be weighed and attaching an inappropriate label to the article to be weighed. Therefore, by using the weighing and packaging system, it is possible to suppress inappropriate execution of processing on the article to be weighed due to no visual confirmation.
(6) The weighing and packaging system according to (5) may include a mode in which the processing of the article to be weighed is continued in a case where the article to be weighed cannot be specified from the captured image of the article to be weighed, and in the mode, the article to be weighed may be conveyed to the packaging unit as the set specific article, and the captured image of the article to be weighed and product information of the specific article may be acquired in association with each other.

According to one aspect of the present disclosure, it is possible to provide the weighing and packaging apparatus and the weighing and packaging system capable of suppressing inappropriate execution of processing due to no visual confirmation of a product.

### BRIEF DESCRIPTION OF THE DRAWINGS

FIG. 1 is an external perspective view illustrating a weighing and packaging apparatus according to one embodiment;
FIG. 2 is a block diagram illustrating a configuration of the weighing and packaging apparatus according to one embodiment;
FIG. 3 is a flowchart for explaining a processing operation of the controller; and
FIG. 4 is a block diagram illustrating a configuration of the weighing and packaging system.

### DETAILED DESCRIPTION

Hereinafter, one embodiment according to one aspect of the present disclosure will be described in detail with reference to the accompanying drawings. In the description of the drawings, the same or corresponding elements are denoted by the same reference numerals, and redundant description is omitted.

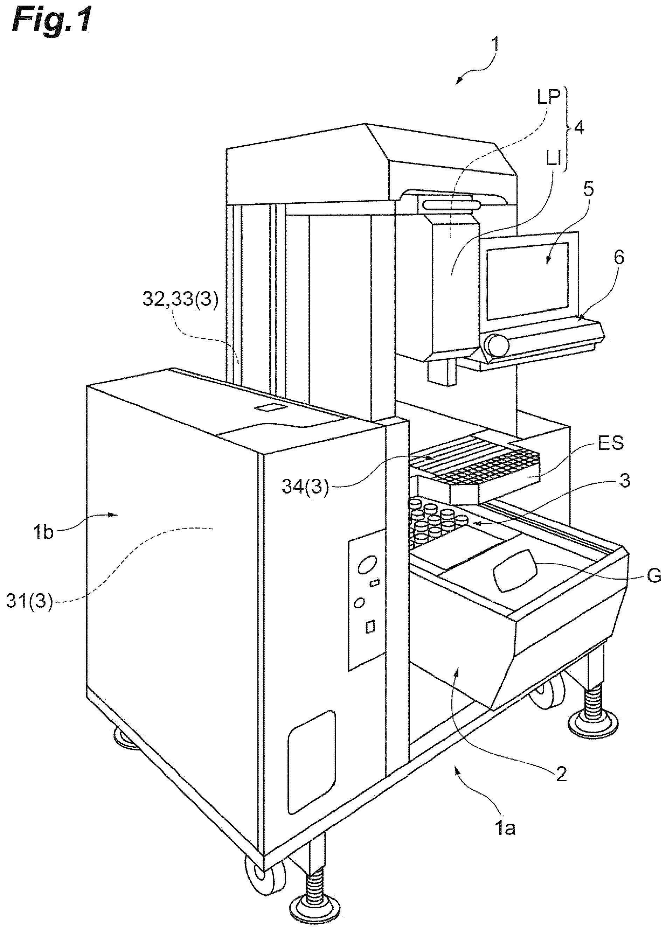

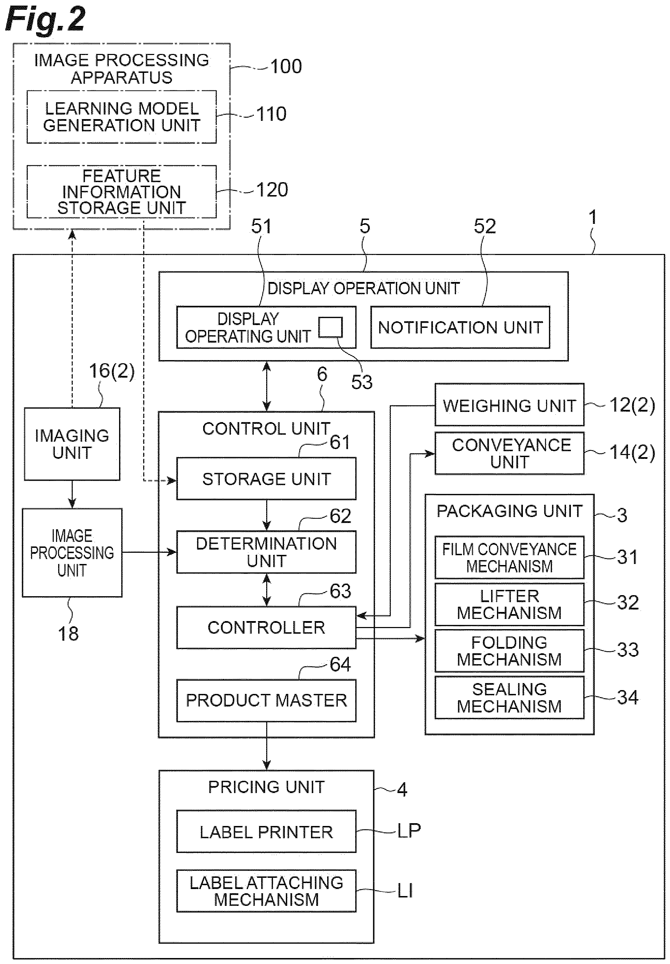

FIG. 1 is an external perspective view illustrating a weighing and packaging apparatus according to the present embodiment. FIG. 2 is a block diagram illustrating a configuration of the weighing and packaging apparatus according to the present embodiment. As illustrated in FIGS. 1 and 2, a weighing and packaging apparatus 1 is an apparatus that performs weighing and packaging of a product G. The weighing and packaging apparatus 1 is configured as a weighing and packaging pricing apparatus by incorporating a pricing unit 4 to be described later. The product G is an article to be weighed, packaged, and priced by the weighing and packaging apparatus 1. The product G includes, for example, an article such as a food item and a container on which the article is placed or stored. When the product G is an article stored in a container, both the article and the container may be packaged by the weighing and packaging apparatus 1.

The weighing and packaging apparatus 1 includes a weighing carrying mechanism 2, a packaging unit 3, a pricing unit 4, a display operation unit 5 and a control unit 6. Each mechanism included in the weighing and packaging apparatus 1 is accommodated in, for example, a main body 1a and a casing 1b of the weighing and packaging apparatus 1. The casing 1b is attached to a side portion of the main body 1a and houses a film roll and the like. In the description of the present embodiment, "left and right" means left and right when facing the front of the main body 1a of the weighing and packaging apparatus 1. The front side in a front-rear direction of the weighing and packaging apparatus 1 is referred to as a "front side", and the opposite side is referred to as a "back side."

The weighing carrying mechanism 2 includes a weighing unit 12, a conveyance unit 14 and an imaging unit 16. The weighing unit 12 is a weighing device that weighs the product G and outputs a weighing result (weighing value) of the product G to the control unit 6. For example, in a case where the weighing value of the product G weighed by the weighing unit 12 is equal to or greater than a value that can be regarded as the placement of the product G, and the value falls within a predetermined mass range over a predetermined period, it is determined that the weighing value is stable. Accordingly, the control unit 6 calculates a net weight of the product G by subtracting a tare of the container or the like from the weighing value in the stable state. The tare of the container or the like is acquired from a product master 64 to be described later when calling the product information of the product G. When the placement of the product G is confirmed, or when the placement is confirmed and the weighing value is stable, the control unit 6 outputs an imaging command to the imaging unit 16. The weighing unit 12 includes a placement portion (not illustrated) such as a weighing pan on which the product G is placed.

The weighing of the product G (article to be weighed) by the weighing unit 12 is repeated at a constant cycle, and when the weighing value is stabilized, the stable flag is raised, and when the weighing value is disturbed, the stable flag is lowered. The stability flag is used as a trigger for start of imaging by the imaging unit 16, conveyance operation by the conveyance unit 14, and the like. However, even when the weighing value becomes unstable due to the influence of disturbance or the like during a period from when the product G is placed on the weighing unit 12 until the conveyance unit 14 is driven, if the stability flag is raised again, the conveyance unit 14 is driven at that timing, and the net weight, the price, and the like of the product G are calculated based on the weighing value input at that timing.

The conveyance unit 14 is a member that conveys the product G placed on the weighing unit 12 to the packaging unit 3, and includes, for example, a pusher conveyor, a belt conveyor, and the like. The conveyance unit 14 conveys, for example, the product G placed on the weighing unit 12 to the back side. As a result, the product G is sent to a lifter mechanism 32 (described later) of the packaging unit 3.

The imaging unit 16 is a member that acquires the captured image of the product G placed on the weighing unit 12, and is, for example, a CCD camera, a CMOS camera, or the like. For example, the imaging unit 16 is disposed above a place where the product G of the weighing unit 12 is placed. Although not illustrated, the imaging unit 16 is attached to, for example, a bottom surface of a discharge table ES located above the weighing carrying mechanism 2. The captured image acquired by the imaging unit 16 is output to an image processing apparatus 100 or an image processing unit 18.

The image processing apparatus 100 is an apparatus that acquires feature information (hereinafter referred to as "first feature information") indicating a feature of a subject included in the captured image, and is directly or indirectly connected to the weighing and packaging apparatus 1. The subject is the product G (article to be weighed, referred to as first article) placed on the weighing unit 12. Therefore, the image processing apparatus 100 can be said to be a device that acquires the feature information of the product G imaged by the imaging unit 16.

The feature information storage unit 120 of the image processing apparatus 100 stores a learned model capable of specifying the product G in association with the product G. The learned model is generated, for example, by inputting teacher data to a learning model generation unit 110 and causing the learning model generation unit to perform machine learning. Specifically, the weighing and packaging apparatus 1 is switched to the learning mode, and a call number of the product G supplied from a display operating unit 51 to the weighing unit 12 is input. In response to the input, a controller 63 acquires the product information of the product G specified by the call number from the product master 64 and outputs the product information to the image processing apparatus 100. Subsequently, when the product G is carried into the weighing unit 12, the imaging unit 16 acquires the captured image of the product G, and outputs the captured image to the image processing apparatus 100. When the weighing value of the weighing unit 12 is stabilized, the product G is conveyed to the packaging unit 3, and then a new product G of the same type is carried into the weighing unit 12. The captured image of the product G and the product information of the product G acquired each time the loading/unloading of the product G described above is repeated are input to the learning model generation unit 110 as the teacher data. The learning model generation unit 110 performs machine learning using the input information as teacher data to generate the learned model of the product G. By performing the processing described above on the plurality of products G, each learned model regarding the plurality of products G is generated. The plurality of generated learned models are stored in the feature information storage unit 120 in association with the product information of each corresponding product G. In the learning mode, the weighing and packaging apparatus 1 may discharge the product G from the packaging unit 3 as it is without packaging the product G. Alternatively, the weighing and packaging apparatus 1 may weigh and package the product G based on the product information read out by the call number, and attach a pricing label.

The learned model of each product G stored in the feature information storage unit 120 is stored as "first feature information" in the storage unit 61 in the control unit 6 of the weighing and packaging apparatus 1 as feature information that can specify the product G.

The learning model generation unit 110 generates a learned model that is a program by various methods. The learned model is a prediction model (also referred to as a learned model) generated by the machine learning, and is an inference program in which parameters (learned parameters) obtained as a result of the machine learning are incorporated. For example, by setting the weighing and packaging apparatus 1 to a learning model generation mode, the learning model generation unit 110 generates the learned model. In addition, the timing at which the imaging unit 16 images the product G may be determined by causing the imaging unit 16 to operate and output the acquired captured image to the image processing apparatus 100 when the weighing unit 12 of the weighing and packaging apparatus 1 determines that the product G is placed on the weighing unit 12 from the change in the weighing value. Alternatively, the image processing apparatus 100 itself may determine that the product G is placed on the weighing unit 12 from the change in the plurality of time-series captured images transmitted from the imaging unit 16, and output the captured image of the product G when the determination is made as the captured image to be processed.

In the present embodiment, the image processing apparatus 100 is a device different from the weighing and packaging apparatus 1, but is not limited thereto. When the image processing apparatus 100 is indirectly connected to the weighing and packaging apparatus 1, for example, the image processing apparatus 100 and the weighing and packaging apparatus 1 are connected via Ethernet (registered trademark) or the like. In this case, the image processing apparatus 100 may be a cloud computer or the like disposed at a location different from the weighing and packaging apparatus 1.

The image processing unit 18 is a member that acquires feature information (hereinafter referred to as "second feature information") indicating the feature of the product G from the captured image, and is connected to the imaging unit 16. The image processing unit 18 may be, for example, a processor computer such as a central processing unit (CPU) mounted on the imaging unit 16. The image processing unit 18 also outputs the acquired second feature information to the control unit 6. The control unit 6 includes a determination unit 62 that compares the second feature information received from the image processing unit 18 with the first feature information received from the storage unit 61. The first feature information is, for example, a product name or the like that can specify a product. The second feature information of the product G is, for example, a product candidate specified by the learned model.

The packaging unit 3 wraps and packages the product G conveyed by the conveyance unit 14 with a film. Specifically, the packaging unit 3 includes a film conveyance mechanism 31, the lifter mechanism 32, a folding mechanism 33, and a sealing mechanism 34.

The film conveyance mechanism 31 is a mechanism that pulls out a film (not illustrated) for packaging the product G from a film roll and conveys the film to a packaging position. For example, the film is housed in the casing 1b in the form of one or more film rolls. In this case, the film pulled out from one film roll by the film conveyance mechanism 31 is held in tension at the packaging position.

The lifter mechanism 32 is a mechanism that raises the product G conveyed from the weighing unit 12 to the packaging position, and is provided at a lower portion of the packaging unit 3. The lifter mechanism 32 pushes up the product G against the film held in tension by the film conveyance mechanism 31. The folding mechanism 33 is a mechanism that folds a peripheral edge of the film protruding from the product G into the bottom surface of the product G. The sealing mechanism 34 is a mechanism that thermally seals an overlapping portion of the film folded by the folding mechanism 33. The sealing mechanism 34 includes, for example, a conveying roller and a heating roller. The roller of the sealing mechanism 34 discharges the packaged product G toward a discharge table ES. The film drawn out by the film conveyance mechanism 31 is cut into a size enclosing the product G by a cutter (not illustrated).

The pricing unit 4 is a mechanism that issues a pricing label related to the product G and attaches the label to the packaged product G. Specifically, the pricing unit 4 includes a label printer LP and a label attaching mechanism LI. The label printer LP prints information (product information) on an article on a label. The product information is, for example, a product name, a unit price, an additive, and the like, and these pieces of information are read from the product master 64 of the control unit 6. In addition, the price of the product calculated from the unit price of the product included in the product information and the weighing value obtained from the weighing unit 12 is also printed on the label. The label attaching mechanism LI attaches the label printed by the label printer LP to the packaged product G.

The display operation unit 5 is a mechanism (interface) that displays product information, an imaging result of the imaging unit 16, and the like, and receives an operation of the weighing and packaging apparatus 1 by the user. The display operation unit 5 includes a display operating unit 51 and a notification unit 52. The display operating unit 51 is, for example, a touch panel type display, and an operation button and the like are also displayed on the display. Various operations and inputs by the user can be performed via the display operating unit 51. For example, the user operates the display operating unit 51 of the display operation unit 5 to input the call number of the product with the designated product (specific article referred to as second article) as the current processing target product (processing target). As a result, the product information of the product specified by the call number is read from the product master 64 and displayed on the display operating unit 51.

When the first feature information of the called product input from the display operating unit 51 as the processing target product and the second feature information acquired from the product G placed on the weighing unit 12 do not match, the notification unit 52 warns that the product called from the product master 64 and the product placed on the weighing unit 12 do not match. The notification by the notification unit 52 may be warning display by an image and/or a video via the display operating unit 51, or may be warning by voice. For example, the display operation unit 5 displays information prompting confirmation of the called product/confirmation of the placed product G.

The control unit 6 is disposed in the main body 1a and controls the operation of each mechanism. Therefore, the control unit 6 includes a computer including a read only memory (ROM) that stores programs, information, and the like, a random access memory (RAM) that temporarily stores data, a storage medium such as a hard disk drive (HDD), a CPU, a communication circuit, and the like. The control unit 6 includes a storage unit 61, a determination unit 62, a controller 63 and a product master 64. The storage unit 61, the determination unit 62, controller 63 and product master 64 are distinguished from each other for convenience, but the present disclosure is not limited thereto. For example, the determination unit 62 may be a part of the controller 63 and the product master 64 may be a part of the storage unit 61.

The storage unit 61 stores a plurality of pieces of first feature information indicating respective features of a plurality of articles transmitted from the image processing apparatus 100, and a packaging parameter for packaging the product G with a film size corresponding to the size of the product G. In addition, data such as unit prices, names, and additives of a plurality of types of products, product information regarding sizes, shapes, materials, tare weights, and the like of the plurality of types of trays, and the like are stored in the product master 64.

The determination unit 62 determines whether or not the placed product G matches the called specific article based on the first feature information from the storage unit 61 and the second feature information from the image processing unit 18. The determination unit 62 performs the above determination by comparing the first feature information with the second feature information. The first feature information input to the determination unit 62 is, for example, feature information corresponding to a specific article (called product) called from the storage unit 61 by the operation of the display operation unit 5. The second feature information input to the determination unit 62 is, for example, feature information of the product G on the weighing unit 12 output from the image processing unit 18. The determination unit 62 determines whether the first feature information matches the second feature information. As the determination result, a first determination result indicating that the called product G matches the specific article placed on the weighing unit 12 and a second determination result indicating that the product G does not match the specific article are output.

The controller 63 is a main part of the control unit 6, and controls the weighing unit 12, the conveyance unit 14, the packaging unit 3, and the like. The controller 63 sets the product specified by the call number input from the display operation unit 5 as the current processing target product, and calls data related to the set processing target product from the storage unit 61 and the product master 64. Specifically, the controller 63 outputs the first feature information read from the storage unit 61 based on the call number to the determination unit 62, and outputs the product information read from the product master 64 to the display operation unit 5 and the label printer LP of the pricing unit 4. The packaging parameter read from the storage unit 61 is output to the packaging unit 3. Further, the controller 63 calculates the net weight and the price of the product G based on the weighing value acquired from the weighing unit 12, and outputs the net weight and the price to the label printer LP as printing information.

The controller 63 determines whether or not the conveyance unit 14 conveys the product G to the packaging unit 3 based on the determination result by the determination unit 62. When the determination unit 62 generates the first determination result indicating that the placed product G matches the called specific article and the weighing value of the placed product G is stabilized, the controller 63 controls the conveyance unit 14 to convey the product G to the packaging unit 3. Meanwhile, when the determination unit 62 generates the second determination result indicating that the product G does not match the specific article, the controller 63 keeps the product G on the weighing unit 12 while stopping the conveyance unit 14, and notifies the notification unit 52 of information prompting review of the called specific article which is the processing target and/or the product G placed on the weighing unit 12.

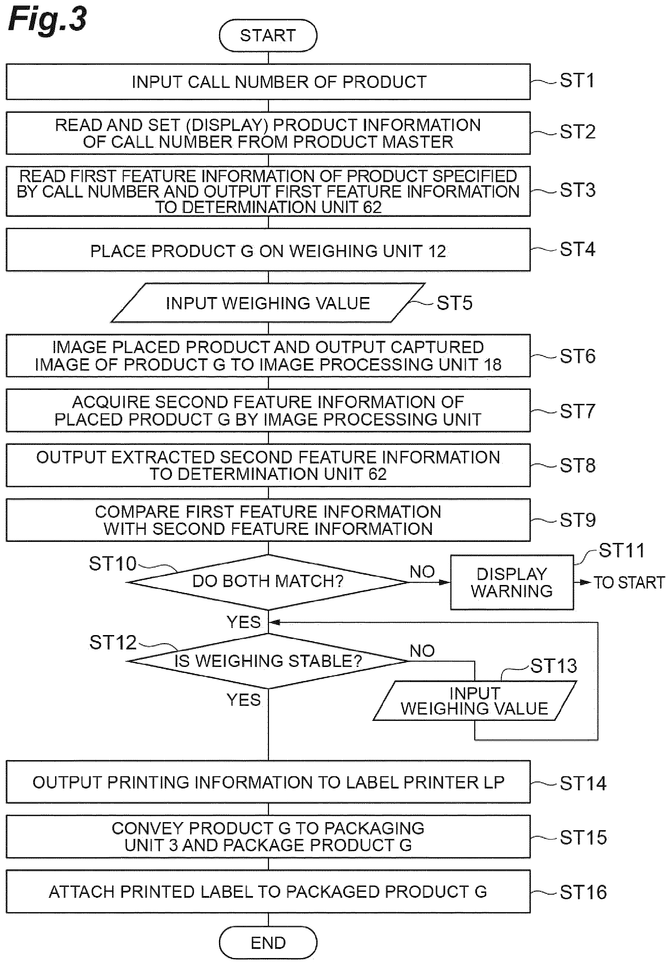

Next, an example of the operation of the controller 63 of the weighing and packaging apparatus 1 according to the present embodiment will be described with reference to FIG. 3. FIG. 3 is a flowchart for explaining a processing operation of the controller 63.

First, the user inputs the call number of the product (Step ST1). That is, in the Step ST1, for example, the user operates the display operation unit 5 to input the call number. In this case, the controller 63 reads the product information of the call number from the product master 64, displays the product information on the display operating unit 51, and outputs the read product information to the label printer LP (Step ST2). Subsequently, the first feature information of the product corresponding to the call number is read from the image processing apparatus 100 or the storage unit 61 and output to the determination unit 62 (Step ST3). Note that the Step ST3 may be performed simultaneously with the Step ST2.

Next, the product G is manually or automatically placed on or supplied to the weighing unit 12 (Step ST4). Then, the controller 63 inputs the weighing value of the product G output from the weighing unit 12 (Step ST5), and determines whether the product G is placed on the weighing unit 12 or whether the weighing value of the product G is stable based on the weighing value. When determining that the product G is placed, the controller 63 causes the imaging unit 16 to start imaging of the product G.

Next, the imaging unit 16 outputs the captured image of the product G to the image processing unit 18 (Step ST6). However, the imaging unit 16 may determine that the product G is placed on the weighing unit 12 by independent determination of the image processing unit 18 without waiting for an instruction from the controller 63. For example, the image processing unit 18 may determine that the product G is placed on the weighing unit 12 from the change in the time-series captured images output from the imaging unit 16, and process the captured image of the product G at the time of the determination as the captured image of the target product. In the Step ST7, the image processing unit 18 acquires the second feature information of the product G from the captured image acquired by the imaging unit 16. Next, the acquired second feature information is output to the determination unit 62 (Step ST8).

Next, the determination unit 62 compares the first feature information with the second feature information (Step ST9). In the Step ST9, it is determined whether the first feature information of the called product corresponding to the input call number matches the second feature information of the product G placed on the weighing unit 12. Either the first determination result or the second determination result is generated by the determination in the Step ST9. When it is determined that both do not match (Step ST10: NO), a warning is displayed by the display operation unit 5 (Step ST11). After the Step ST11, the operation of the weighing and packaging apparatus 1 is terminated. In this case, for example, after confirming the placed product G and the product information of the called product displayed on the display operation unit 5, the user cancels the matter of the warning display. Then, the user starts again from the Step ST1.

When it is determined that the called product and the placed product G match (Step ST10: YES), the controller 63 determines whether the weighing value of the product G is stable. The weighing value used for this determination is the weighing value of the product G acquired after Step ST9 or after Step ST10. After the Step ST10, when the weighing value of the product G is not stable (Step ST12: NO), the process proceeds to a loop for inputting the weighing value again (Step ST13).

After the Step ST10 and when the weighing value of the product G is stabilized (Step ST12: YES), the controller 63 outputs the pricing data such as the net weight and the price calculated based on the weighing value at the time of stabilization to the label printer LP (Step ST14). The label printer LP creates printing information based on the product information input in the Step ST2 and the pricing data, and prints and issues the printing information on the label.

In addition, the controller 63 drives the conveyance unit 14 to convey the product G placed on the weighing unit 12 to the packaging unit 3 to package the product G (Step ST15). Meanwhile, the label printer LP issues a printed label, and when the packaged product G is discharged to the discharge table ES, the label attaching mechanism LI attaches the issued label to the packaged product G (Step ST16). As described above, weighing, packaging, and pricing of the product G using the weighing and packaging apparatus 1 are performed.

As described above, according to the weighing and packaging apparatus 1 of the present embodiment, the determination result as to whether or not the placed product G matches the called product is generated based on the first feature information of the called product corresponding to the call number and the second feature information acquired from the captured image of the placed product G. In addition, it is determined whether the conveyance unit 14 conveys the product G to the packaging unit 3 based on the determination result. As a result, for example, the product G cannot be packaged unless it is determined that the placed product G matches the called product set as the processing target product. For this reason, even in a case where the user does not visually confirm the product G, it is difficult to perform inappropriate packaging on the product G, attaching an inappropriate label to the product G, and the like. Therefore, by using the weighing and packaging apparatus 1, it is possible to suppress inappropriate execution of processing on the product G due to non-visual confirmation.

In the present embodiment, when the determination unit 62 of the control unit 6 generates the first determination result indicating that the placed product G matches the called product and the weighing value of the product G is stabilized, the conveyance unit 14 conveys the product G to the packaging unit 3. For this reason, in a case where the product G does not match the called product, inappropriate processing such as inappropriate packaging on the product G and attaching an inappropriate label to the product G is less likely to be executed.

In the present embodiment, when the determination unit 62 generates the second determination result indicating that the placed product G does not match the called product, the controller 63 may control the conveyance unit 14 so that the placed product G is not conveyed to the packaging unit 3, and may notify information prompting review of the processing target product (called product) and/or the placed product G via the notification unit 52. In this case, the user of the weighing and packaging apparatus 1 can quickly review the processing target product and/or the placed product G.

Although the embodiment according to one aspect of the present disclosure has been described above, one aspect of the present disclosure is not limited to the above embodiment. For example, in the above embodiment, when the second determination result is output even though the called product matches the product placed on the weighing unit, the use of the first feature information may be stopped. In such a case, a color tone of the captured image of the imaging unit 16, for example, a color or a color tone of meat or the like is changed by the illumination of the place where the weighing and packaging apparatus 1 is installed, and thus the product G may be recognized as another product, for example. In preparation for such a case, the image of the called product may be stored in advance in the storage unit 61, and in a case where inconsistency occurs, the captured image of the actual product G on the weighing unit 12 imaged by the imaging unit 16 and the captured image read from the storage unit 61 may be displayed in comparison on the display operating unit 51, and the operator may visually inspect whether or not these images match each other. In addition, the image processing apparatus 100 may be caused to perform the machine learning again so that the first feature information matches the second feature information.

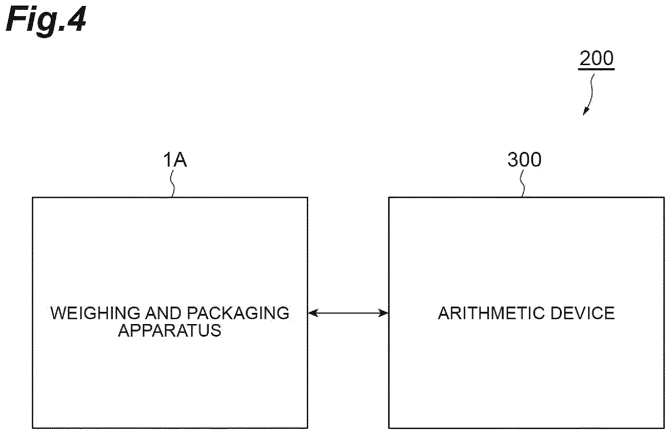

In the above embodiment, the image processing apparatus generates the learning model and acquires the first feature information, but the present invention is not limited thereto. FIG. 4 is a block diagram illustrating a configuration of the weighing and packaging system. As illustrated in FIG. 4, the weighing and packaging system 200 includes a weighing and packaging apparatus 1A and an arithmetic device 300. The weighing and packaging apparatus 1A may be the same as or different from the weighing and packaging apparatus 1 described in the above embodiment. For example, the weighing and packaging apparatus 1A may not include at least one of the image processing unit 18 and the determination unit 62 described in the above embodiment. The arithmetic device 300 is a processing device including at least a part of the image processing apparatus 100 described in the above embodiment. The arithmetic device 300 can perform wired communication or wireless communication with the weighing and packaging apparatus 1A. In the latter case, the arithmetic device 300 may be provided at a location different from the weighing and packaging apparatus 1A. The arithmetic device 300 is not particularly limited, and is, for example, a laptop PC, a tablet, a cloud computer, or the like. The arithmetic device 300 may have a portion corresponding to the image processing unit 18. In this case, the arithmetic device 300 receives the captured image of the product G acquired by the imaging unit 16, and acquires the second feature information from the captured image. The arithmetic device 300 may further include a portion corresponding to the determination unit 62. In this case, the arithmetic device 300 may generate a determination result as to whether the placed product G matches the called product based on the first feature information and the second feature information. Also in such a weighing and packaging system 200, the same effects as those of the above embodiment can be obtained.

In the above embodiment, when the product placed on the weighing unit 12 does not match the product called by the call operation based on the first feature information of the product G read from the storage unit by the call operation of the product information and the second feature information acquired from the captured image of the product G placed on the weighing unit 12, the product G is not conveyed toward the packaging unit 3. Therefore, for example, when an unlearned product for which a learned model has not been generated is placed on the weighing unit 12, the product on the weighing unit cannot be specified, and thus the controller 63 cannot drive the conveyance unit 14.

In such a case, it is usually necessary to switch the weighing and packaging apparatus 1 to the learning mode and generate a learned model of an unlearned product in the image processing apparatus 100. However, since products to be processed are produced one after another at the site where the weighing and packaging apparatus 1 is already introduced, keeping such unlearned products on the production line will confuse the site.

Therefore, a weighing and packaging apparatus according to another aspect of the present disclosure includes a mode in which processing of an article to be weighed is continued when the article to be weighed cannot be specified from the captured image of the article to be weighed (product) placed on a weighing unit by an image processing unit, under the mode, the article to be weighed is conveyed to a packaging unit as a set specific article, and the captured image of the article to be weighed and product information of the set specific article are acquired in association with each other.

Shifting (setting) from the normal weighing mode to the mode for continuing the processing of the product with respect to the weighing and packaging apparatus is performed, for example, by the operator operating a switching key 53 of the display operating unit 51, but is not limited thereto. When the image processing unit 18 determines that the product on the weighing unit 12 cannot be specified from the input captured image, the controller 63 may automatically drive the conveyance unit 14 and the packaging unit 3 to perform the above shifting.

As a result, even when the products to be processed are sent one after another from the upstream, the products placed on the weighing unit 12 are weighed, packaged, and further priced and discharged. In addition, the captured image of the product acquired by the imaging unit 16 and the product information of the product set by the call operation of the product are input to the learning model generation unit 110 of the image processing apparatus 100 as teacher data. As a result, the learning model generation unit 110 generates a learned model based on the input information. Therefore, it is possible to store the learned model of the product in the feature information storage unit 120 and the storage unit 61 as the feature information that can specify the product while generating the learned model of the unlearned product without stopping the weighing and packaging apparatus 1. The above-described teacher data is input to the learning model generation unit 110 of the image processing apparatus 100, but the present disclosure is not limited thereto. In a case where the arithmetic device 300 includes the learning model generation unit, the teacher data may be input to the arithmetic device 300.

## Claims

1. A weighing and packaging apparatus comprising:
a weighing unit configured to weigh a first article to be weighed;
a packaging unit configured to package the first article;
a conveyance unit configured to convey the first article placed on the weighing unit to the packaging unit;
an imaging unit configured to acquire a captured image of the first article placed on the weighing unit;
a storage unit configured to store a plurality of pieces of first feature information indicating respective features of a plurality of articles;
an image processing unit configured to acquire second feature information indicating a feature of the first article from the captured image; and
a controller configured to control the conveyance unit and the packaging unit,
wherein the controller is configured to
set a second article among the plurality of articles as a current processing target,
generate a determination result as to whether or not the first article matches the second article based on feature information corresponding to the second article among the plurality of pieces of first feature information and the second feature information, and
determine whether or not the first article is conveyed to the packaging unit by the conveyance unit based on the determination result.

2. The weighing and packaging apparatus according to claim 1, wherein, when the controller generates a first determination result indicating that the first article matches the second article and a weighing value of the first article is stabilized, the conveyance unit conveys the first article to the packaging unit.

3. The weighing and packaging apparatus according to claim 1 or 2, wherein, when the controller generates a second determination result indicating that the first article does not match the second article, the controller is configured to:
control the conveyance unit such that the first article is not conveyed to the packaging unit, and
notify information prompting review of the processing target and/or the first article via a notification unit.

4. The weighing and packaging apparatus according to any one of claims 1 to 3, wherein, when a mode is set in which the processing of the first article is continued in a case where the first article cannot be specified from the captured image of the first article, the first article is conveyed to the packaging unit as the second article, and the captured image of the first article and product information of the second article are acquired in association with each other.

5. A weighing and packaging system comprising:
a weighing unit configured to weigh a first article to be weighed;
a packaging unit configured to package the first article;
a conveyance unit configured to convey the first article placed on the weighing unit to the packaging unit;
a storage unit configured to store a plurality of pieces of first feature information indicating respective features of a plurality of articles;
an imaging unit configured to acquire a captured image of the first article placed on the weighing unit; and
an arithmetic device configured to acquire second feature information indicating a feature of the first article from the captured image,
wherein the arithmetic device is configured to:
set a second article among the plurality of articles as a current processing target,
generate a determination result as to whether or not the first article matches the second article based on feature information corresponding to the second article among the plurality of pieces of first feature information and the second feature information, and
determine whether or not the first article is conveyed to the packaging unit by the conveyance unit based on the determination result.

6. The weighing and packaging system according to claim 5, wherein when a mode is set in which the processing of the first article is continued in a case where the first article cannot be specified from the captured image of the first article, the first article is conveyed to the packaging unit as the second article, and the captured image of the first article and product information of the second article are acquired in association with each other.
